# EUROPÄISCHE PATENTSCHRIFT

(11) **EP 2 214 391 B1**
(45) Veröffentlichungstag und Bekanntmachung des Hinweises auf die Patenterteilung: **07.03.2012**
(21) Anmeldenummer: 10150768.9
(22) Anmeldetag: 14.01.2010
(51) Int. Cl.: H04M 3/533

(54) **Verfahren zur Weiterleitung von Sprachnachrichten als E-Mail**
Method for forwarding spoken messages as an email
Procédé de routage d'informations vocales sous forme d'e-mail

(30) Priorität: 28.01.2009 DE 102009006489
(43) Veröffentlichungstag der Anmeldung: 04.08.2010
(73) Patentinhaber: Vodafone Holding GmbH, 40213 Düsseldorf (DE)
(72) Erfinder: Bröcking, Peter, 47809, Krefeld (DE); Gabert, Sascha, 40468, Düsseldorf (DE)
(74) Vertreter: Weisse, Renate

(56) Entgegenhaltungen:
- WO-A1-2007/127139
- WO-A2-2004/095422
- WO-A2-2007/131060

## Beschreibung

### Technisches Gebiet

Die Erfindung betrifft ein Verfahren zur Weiterleitung einer Sprachnachricht, welche von einem Anrufer in einem Sprachnachrichtenspeicher eines Mobilfunkteilnehmers in einem Mobilfunknetz hinterlassen wird, mit folgenden Verfahrensschritten:
a) Weiterleiten der Sprachnachricht von dem Sprachnachrichtenspeicher zu einem Nachrichtenserver im Mobilfunknetz,
b) Konvertieren der Sprachnachricht durch eine Konvertierungsvorrichtung des Nachrichtenservers in eine E-Mail,
c) Übermitteln der E-Mail mit der Sprachnachricht und einer Kennung des Anrufers an ein E-Mail-Konto des Mobilfunkteilnehmers und
d) Empfangen der E-Mail mit der Sprachnachricht mit einem E-Mail-Programm auf einem Endgerät durch den Mobilfunkteilnehmer.

Weiterhin betrifft die Erfindung einen Nachrichtenserver in einem Mobilfunknetz zur Weiterleitung einer Sprachnachricht, welche von einem Anrufer in einem Sprachnachrichtenspeicher eines Mobilfunkteilnehmers in dem Mobilfunknetz hinterlassen wird, enthaltend:
a) eine Empfangseinheit zum Empfangen der Sprachnachricht von dem Sprachnachrichtenspeicher,
b) eine Konvertierungsvorrichtung zum Konvertieren der Sprachnachricht in eine E-Mail und
c) ein Übertragungsmittel zum Übermitteln der E-Mail mit der Sprachnachricht und einer Kennung des Anrufers an ein E-Mail-Konto des Mobilfunkteilnehmers.

### Stand der Technik

Für Mobilfunkteilnehmer eines Mobilfunknetzes wird normalerweise ein Anrufbeantworter im Mobilfunknetz zur Verfügung gestellt. Ein solcher, auch als Voice-Mailbox bezeichneter Anrufbeantworter ermöglicht Anrufern, eine Sprachnachricht für einen Mobilfunkteilnehmer zu hinterlassen, falls keine Verbindung zu einem angewählten Mobilfunkendgerät des Mobilfunkteilnehmers hergestellt werden kann. Dies ist beispielsweise dann der Fall, wenn der Mobilfunkteilnehmer gerade selber mit dem Mobilfunkendgerät telefoniert, den Anruf nicht annimmt oder das Mobilfunkendgerät ausgeschaltet oder nicht über das Mobilfunknetz erreichbar ist.

Über eine gespeicherte Sprachnachricht wird der Mobilfunkteilnehmer gewöhnlich durch eine SMS- (Short Message Service-) Kurznachricht informiert. Die SMS-Kurznachricht fordert den Mobilfunkteilnehmer zum Abhören seiner Voice-Mailbox auf und kann auch eine Rufnummer des Anrufers für einen direkten Rückruf enthalten. Bekannt sind auch Verfahren zur Weiterleitung der Sprachnachricht an ein Mobilfunkendgerät des Mobilfunkteilnehmers. Die Anmelderin bietet zum Beispiel den Dienst "Vodafone Visual Mailbox" an, bei dem eine Sprachnachricht als MMS- (Multimedia Messaging Service-) Nachricht an ein MMS-fähiges Mobilfunkendgerät weitergeleitet wird. Anschließend kann der Mobilfunkteilnehmer die Sprachnachricht mit seinem Mobilfunkendgerät beliebig oft abhören, als Text- oder Sprachnachricht beantworten oder weiterleiten, den Anrufer zurückrufen oder die Sprachnachricht auf dem Mobilfunkendgerät speichern. Das Abhören und Verwalten von Sprachnachrichten wird damit für den Mobilfunkteilnehmer erheblich vereinfacht.

Mit der Nutzung verschiedener Kommunikationsnetze, wie beispielsweise dem Internet, einem Mobilfunknetz und einem Festnetz erhält oder versendet ein Benutzer unterschiedliche elektronische Nachrichten (z.B. E-Mail, SMS, MMS, Fax und Sprachnachrichten). Zum Empfangen oder Senden dieser Nachrichten werden jeweils entsprechende Endgeräte benötigt. Dieser Umstand führt dazu, dass ein Benutzer nur mit großem Aufwand und umständlicher Nutzung verschiedener Endgeräte alle an ihn gerichteten Nachrichten empfangen und beantworten kann. Es sind daher Bestrebungen und Entwicklungen bekannt, um in jeglicher Form eingehende und zu sendende Nachrichten in eine einheitliche Form zu bringen und einem Benutzer über unterschiedliche Endgeräte Zugang auf diese zu gewähren. Entsprechende Verfahren werden auch als Unified Messaging bezeichnet.

So sind, beispielsweise aus der GB 2 420 944 A, Verfahren zur Weiterleitung von Sprachnachrichten in einer Voice-Mailbox als E-Mail bekannt. Dabei wird eine Sprachnachricht in eine E-Mail konvertiert und die E-Mail an ein E-Mail-Konto des Mobilfunkteilnehmers gesendet. Der Mobilfunkteilnehmer wird somit in die Lage versetzt, gleichzeitig mit seinen empfangenen E-Mails auch auf der Voice-Mailbox hinterlassene Sprachnachrichten mit einem E-Mail-Programm zu empfangen und zu lesen. Anschließend ist eine Beantwortung durch eine E-Mail oder eine Speicherung in dem verwendeten Endgerät möglich.

Nachteilig an den bekannten Verfahren zum Weiterleiten von Sprachnachrichten als E-Mail ist, dass der Mobilfunkteilnehmer nach dem Lesen oder Anhören einer Sprachnachricht mit einem entsprechenden Endgerät zum Empfang von E-Mails, wie beispielsweise einem PC oder Laptop mit Intemetanschluss, keinen direkten Rückruf mit diesen Endgeräten vornehmen kann. Vielmehr muss der Mobilfunkteilnehmer zunächst sein Mobilfunkendgerät oder ein Festnetztelefon zur Hand nehmen und umständlich eine entsprechende Rufnummer des Anrufers in dieses eingeben oder einen Adressbucheintrag suchen. Dazu muss der Mobilfunkteilnehmer aufwändig die E-Mail mit der Sprachnachricht zur Verfügung haben oder sich die Rufnummer merken bzw. notieren.

### Offenbarung der Erfindung

Aufgabe der Erfindung ist es daher, Nachteile des Standes der Technik zu vermeiden und einem Mobilfunkteilnehmer einen Rückruf auf eine als E-Mail empfangene Sprachnachricht einfacher und bequemer zu ermöglichen.

Erfindungsgemäß wird die Aufgabe durch ein Verfahren der eingangs genannten Art zur Weiterleitung einer Sprachnachricht, welche von einem Anrufer in einem Sprachnachrichtenspeicher eines Mobilfunkteilnehmers in einem Mobilfunknetz hinterlassen wird, mit folgenden Verfahrensschritten gelöst:
e) Anfordern einer Rufnummer des Anrufers von dem Nachrichtenserver mittels der Kennung durch den Mobilfunkteilnehmer und
f) Übermitteln der Rufnummer des Anrufers von dem Nachrichtenserver an ein Mobilfunkendgerät des Mobilfunkteilnehmers für einen Rückruf.

Weiterhin wird die Aufgabe dadurch gelöst, dass bei einem Nachrichtenserver der eingangs genannten Art in einem Mobilfunknetz zur Weiterleitung einer Sprachnachricht, welche von einem Anrufer in einem Sprachnachrichtenspeicher eines Mobilfunkteilnehmers in dem Mobilfunknetz hinterlassen wird,
d) eine Anforderungseinheit zum Empfangen einer Anforderung einer Rufnummer des Anrufers mit der Kennung von dem Mobilfunkteilnehmer und
e) eine Übermittelungseinheit zum Übermitteln der Rufnummer des Anrufers von dem Nachrichtenserver an ein Mobilfunkendgerät des Mobilfunkteilnehmers für einen Rückruf vorgesehen sind.

Die Erfindung beruht auf dem Prinzip, dass ein Mobilfunkteilnehmer nach dem Lesen oder Anhören der als E-Mail empfangenen Sprachnachricht mit Hilfe der Kennung in der E-Mail eine Rufnummer des Hinterlegers der Sprachnachricht von dem Nachrichtenserver anfordern kann. Dabei wird die Rufnummer von dem Nachrichtenserver direkt an ein Mobilfunkendgerät des Mobilfunkteilnehmers übermittelt.

Durch das erfindungsgemäße Verfahren und den korrespondierenden, erfindungsgemäßen Nachrichtenserver steht dem Mobilfunkteilnehmer eine Rufnummer für einen Rückruf in seinem Mobilfunkendgerät zur Verfügung. Der Mobilfunkteilnehmer muss nicht mehr umständlich die Rufnummer auf sein Mobilfunkendgerät übertragen. Dabei wird dem Mobilfunkteilnehmer direkt beim Lesen oder Anhören von Sprachnachrichten mit seinem E-Mail-Programm eine Auswahl der Sprachnachrichten ermöglicht, bei welchen er einen Rückruf durchführen möchte. Nur zu diesen Sprachnachrichten erhält der Mobilfunkteilnehmer durch eine Anforderung vom Nachrichtenserver die entsprechenden Rufnummern auf sein Mobilfunkendgerät übermittelt. Anschließend führt der Mobilfunkteilnehmer die Rückrufe bequem mit seinem Mobilfunkendgerät und den darin gespeicherten, vom Nachrichtenserver empfangenen Rufnummern durch. Das erfindungsgemäße Verfahren und der erfindungsgemäße Nachrichtenserver erleichtern somit einen Rückruf auf eine als E-Mail empfangene Sprachnachricht wesentlich.

Eine vorteilhafte Ausgestaltung des erfindungsgemäßen Verfahrens zur Weiterleitung einer Sprachnachricht wird dadurch erreicht, dass das Anfordern der Rufnummer des Anrufers durch Übermitteln einer Antwort-E-Mail mit der Kennung von dem Endgerät des Mobilfunkteilnehmers an den Nachrichtenserver erfolgt. Durch diese Maßnahme wird es dem Mobilfunkteilnehmer ermöglicht, unmittelbar nach dem Lesen der E-Mail bzw. dem Anhören eines Audio-Anhangs, welche die Sprachnachricht enthält, mit dem verwendeten E-Mail-Programm eine Rufnummer des Anrufers für sein Mobilfunkendgerät anzufordern. Dazu kann der Mobilfunkteilnehmer beispielsweise eine leere Antwort-E-Mail durch das E-Mail-Programm generieren und versenden lassen. Die Anforderung erfolgt daher für den Mobilfunkteilnehmer sehr bequem mit dem E-Mail-Programm und dem entsprechenden Endgerät, mit denen die als E-Mails übermittelten Sprachnachrichten gelesen oder angehört werden.

Das Übermitteln der Rufnummer des Anrufers von dem Nachrichtenserver an das Mobilfunkendgerät des Mobilfunkteilnehmers erfolgt in einer weiteren bevorzugten Ausbildung des erfindungsgemäßen Verfahrens durch eine SMS- (Short Message Service-) Kurznachricht. Ein SMS-Nachrichtendienst ist standardmäßig in allen digitalen Mobilfunknetzen vorgesehen. Zur Übermittlung werden somit vorteilhaft vorhandene Ressourcen eingesetzt. Weiterhin ist der SMS-Nachrichtendienst äußerst erfolgreich und wird von sehr vielen Mobilfunkteilnehmern genutzt. Die Übermittlung der Rufnummer erfolgt somit benutzerfreundlich auf eine dem Mobilfunkteilnehmer bekannte Art und Weise. Ferner wird durch die asynchrone Versendung von SMS-Kurznachrichten, bei der eine Zustellung immer dann erfolgt, wenn das entsprechende Mobilfunkendgerät erreichbar ist, eine sehr zuverlässige Übermittlung gewährleistet. Auch ist eine direkte Übernahme und Verwendung einer per SMS-Kurznachricht übermittelten Rufnummer durch das Mobilfunkendgerät möglich.

Dabei enthält in einer Weiterbildung des erfindungsgemäßen Verfahrens zur Weiterleitung einer Sprachnachricht die SMS-Kurznachricht von dem Nachrichtenserver vorteilhaft die Rufnummer des Anrufers als Absenderrufnummer. Für einen Rückruf verwendet der Mobilfunkteilnehmer unmittelbar die von seinem Mobilfunkendgerät empfangene SMS-Nachricht. Dadurch wird ein Rückruf zu einem Anrufer durch den Mobilfunkteilnehmer mit seinem Mobilfunkendgerät bedeutend erleichtert.

Eine bevorzugte Ausgestaltung des erfindungsgemäßen Verfahrens wird dadurch erreicht, dass die Sprachnachricht von dem Sprachnachrichtenspeicher als MMS-(Multimedia Messaging Service-) Nachricht an den Nachrichtenserver übermittelt wird. MMS wird von 3GPP (3rd Generation Partnership Project) und OMA (Open Mobile Alliance) standardisiert und ist beispielsweise in Mobilfunknetzen nach dem GPRS-(General Packet Radio Service-) oder UMTS- (Universal Mobile Telecommunications System) Standard verfügbar. Durch die Verwendung einer MMS-Nachricht werden bei der Übermittlung der Sprachnachricht von dem Sprachnachrichtenspeicher zu dem Nachrichtenserver kostengünstig vorhandene Ressourcen des Mobilfunknetzes verwendet. Ferner eignet sich diese Ausgestaltung des erfindungsgemäßen Verfahrens besonders für Sprachnachrichtenspeicher, bei denen bereits eine Weiterleitung von Sprachnachrichten als MMS vorgesehen ist.

Eine weitere vorteilhafte Ausbildung des erfindungsgemäßen Verfahrens wird dadurch erzielt, dass der Mobilfunkteilnehmer eine Konfiguration des Nachrichtenserver mit einer Konfigurationsvorrichtung durchführt. Mit einer Konfiguration des Nachrichtenservers durch den Mobilfunkteilnehmer wird eine Weiterleitung von Sprachnachrichten als E-Mail optimal an die Bedürfnisse und Wünsche des Mobilfunkteilnehmers angepasst. Beispielsweise kann der Mobilfunkteilnehmer bei einer Konfiguration festlegen, an welches E-Mail-Konto und zu welchen Zeitpunkten eine Weiterleitung erfolgt. Weiterhin kann z.B. auch eine Weiterleitung als E-Mail in Abhängigkeit von dem Anrufer oder der Zeit und des Datums des Anrufs durch den Mobilfunkteilnehmer konfigurierbar sein.

Bei einer Ausgestaltung des erfindungsgemäßen Verfahrens ist vorteilhaft ein Archivieren der E-Mail mit der Sprachnachricht in einem Nachrichtenspeicher des Mobilfunknetzes für den Mobilfunkteilnehmer vorgesehen. Durch diese Maßnahme sind weitergeleitet Sprachnachrichten auch später jederzeit von dem Mobilfunkteilnehmer aus dem Mobilfunknetz abrufbar. Dem Mobilfunkteilnehmer wird ein einfacher, jederzeit möglicher Zugriff und eine effektive Absicherung vor Verlust von weitergeleiteten Sprachnachrichten gewährleistet.

Ferner ist in einer bevorzugten Ausgestaltung des erfindungsgemäßen Verfahrens ein Aussortieren von unerwünschten Sprachnachrichten durch eine Filtereinrichtung des Nachrichtenservers vorgesehen. Unerwünschte Sprachnachrichten, wie beispielsweise Werbenachrichten oder mit Viren verseuchte Sprachnachrichten, werden direkt beim Nachrichtenserver aussortiert und erreichen somit sehr benutzerfreundlich den Mobilfunkteilnehmer nicht.

Eine vorteilhafte Ausbildung des erfindungsgemäßen Nachrichtenservers in einem Mobilfunknetz zur Weiterleitung einer Sprachnachricht wird dadurch erreicht, dass die Anforderungseinheit zum Empfangen einer Antwort-E-Mail als Anforderung einer Rufnummer des Anrufers ausgebildet ist. Dadurch wird es dem Mobilfunkteilnehmer ermöglicht, direkt mit dem zum Lesen der E-Mail verwendeten E-Mail-Programm eine Rufnummer des Anrufers für sein Mobilfunkendgerät anzufordern. Beispielsweise sendet der Mobilfunkteilnehmer eine Antwort-E-Mail mit dem E-Mail-Programm an den Nachrichtenserver zurück. Eine Anforderung erfolgt daher sehr benutzerfreundlich und ohne zusätzliche Nutzung weiterer Endgeräte direkt mit dem verwendeten E-Mail-Programm.

Bei einer weiteren bevorzugten Ausgestaltung des erfindungsgemäßen Nachrichtenservers ist die Übermittelungseinheit zum Senden einer SMS-Kurznachricht mit der Rufnummer des Anrufers an das Mobilfunkendgerät des Mobilfunkteilnehmers ausgebildet. Wie bei der entsprechenden Ausgestaltung des erfindungsgemäßen Verfahrens werden durch eine Verwendung einer SMS-Kurznachricht zur Übermittlung der Rufnummer bereits im Mobilfunknetz vorhandene Ressourcen eingesetzt. Zudem stellt eine SMS-Nachricht eine dem Mobilfunkteilnehmer bekannte, benutzerfreundliche und zuverlässige Übermittlung der Rufnummer dar, bei der eine direkte Übernahme und Anwahl einer übermittelten Rufnummer durch ein Mobilfunkendgerät möglich ist.

Weitere Ausbildungen des erfindungsgemäßen Nachrichtenservers korrespondieren jeweils mit den oben beschriebenen Ausbildungen des erfindungsgemäßen Verfahrens und verfügen über die entsprechenden Vorteile.

Ferner ergeben sich weitere Ausgestaltungen und Vorteile aus dem Gegenstand der Unteransprüche, sowie der Zeichnung mit der dazugehörigen Beschreibung.

Ein Ausführungsbeispiel der Erfindung ist nachstehend unter Bezugnahme auf die zugehörige Zeichnung näher erläutert.

### Kurze Beschreibung der Zeichnung

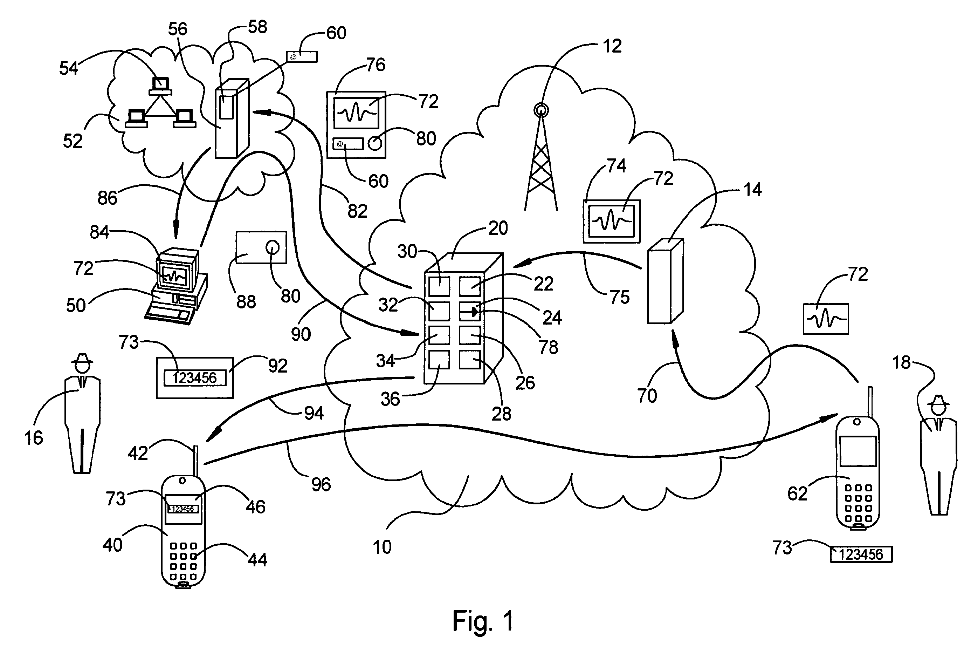

- Fig. 1: zeigt in einer schematischen Prinzipskizze ein Ausführungsbeispiel des erfindungsgemäßen Verfahrens und des Nachrichtenservers zur Weiterleitung von Sprachnachrichten als E-Mail.

### Bevorzugtes Ausführungsbeispiel

In Fig. 1 wird mit 10 ein Mobilfunknetz bezeichnet. Das Mobilfunknetz 10 ist ein Mobilfunknetz der 2,5., 3. oder 4. Generation und ist beispielsweise nach dem GSM-, GPRS-, UMTS-, CDMA2000-, FOMA-, TD-SCDMA-, LTE/SEA oder WiMAX-Standard ausgebildet. Dem Fachmann sind solche Mobilfunknetze mit den entsprechenden Bestandteilen geläufig. Der Einfachheit halber wird das Mobilfunknetz 10 daher nur durch eine Wolke mit einem darin enthaltenen Funkmast 12 stilisiert dargestellt.

Das Mobilfunknetz 10 verfügt insbesondere über einen Sprachnachrichtenspeicher 14 zum Speichern von Sprachnachrichten für einen Mobilfunkteilnehmer 16 von einem Anrufer 18, falls der Mobilfunkteilnehmer 16 nicht erreichbar ist. Der Sprachnachrichtenspeicher 14 ist dem Fachmann auch als Anrufbeantworter oder Voice-Mailbox bekannt.

Weiterhin enthält das Mobilfunknetz 10 einen Nachrichtenserver 20 zum Weiterleiten von in dem Sprachnachrichtenspeicher 14 hinterlassenen, gespeicherten Sprachnachrichten als E-Mail an den Mobilfunkteilnehmer 16. Dazu verfügt der Nachrichtenserver 20 über eine Empfangseinheit 22 zum Empfangen von Sprachnachrichten von dem Sprachnachrichtenspeicher 14. Die Empfangseinheit 22 ist in diesem Ausführungsbeispiel zum Empfangen von MMS-Nachrichten mit darin enthaltenen Sprachnachrichten ausgebildet. Mit einer Konvertierungsvorrichtung 24 konvertiert der Nachrichtenserver 20 eine empfangene Sprachnachricht bzw. eine MMS-Nachricht mit einer Sprachnachricht zu einer E-Mail. Dazu kann beispielsweise die Sprachnachricht in einen Text konvertiert oder als Audio-Anhang an die E-Mail angefügt werden.

Zur Übermittlung einer generierten E-Mail an den Mobilfunkteilnehmer 16 verfügt der Nachrichtenserver 20 über Übertragungsmittel 26. Dabei wird eine E-Mail-Adresse des Mobilfunkteilnehmers 16 durch den Nachrichtenserver 20 aus einem Teilnehmerprofil ermittelt. Das in Fig. 1 nicht dargestellt Teilnehmerprofil kann z.B. intern im Nachrichtenserver 20 oder extern in einer Komponente des Mobilfunknetzes 10, beispielsweise in einem Teilnehmerheimatregister, vorgesehen sein. Zusätzlich wird die E-Mail durch den Nachrichtenserver 20 mit einer eindeutigen Kennung versehen.

In dem Nachrichtenserver 20 ist weiterhin eine Anforderungseinheit 28 zum Empfangen einer E-Mail mit einer Anforderung einer Rufnummer des Anrufers 18 und eine Übermittlungseinheit 30 zum Übermitteln der Rufnummer als SMS-Kurznachricht an den Mobilfunkteilnehmer 16 enthalten. Ferner verfügt der Nachrichtenserver 20 über eine Filtereinrichtung 32 zum Aussortieren von unerwünschten Sprachnachrichten und einen Nachrichtenspeicher 36 zum Archivieren von generierten E-Mails mit Sprachnachrichten.

Mit einer Konfigurationsvorrichtung 34 des Nachrichtenservers 20 ist eine Konfiguration des Nachrichtenservers 20 durch den Mobilfunkteilnehmer 16 möglich. Somit lässt sich der Nachrichtenserver 20 optimal an die Bedürfnisse und Wünsche des Mobilfunkteilnehmers 16 anpassen. Konfigurierbar ist beispielsweise, an welches E-Mail-Konto und zu welchen Zeitpunkten eine Weiterleitung erfolgt. Auch eine Weiterleitung als E-Mail in Abhängigkeit von dem Anrufer oder von Zeit und Datum des Anrufs ist einstellbar. Weiterhin wird z.B. eine Konfiguration der Filtereinrichtung 32 und der Archivierung von E-Mails in dem Nachrichtenspeicher 36, sowie eine Auswahl des Endgeräts, an das die SMS-Kurznachricht gesendet wird, durch die Konfigurationsvorrichtung 34 ermöglicht.

Die einzelnen Komponenten 22, 24, 26, 28, 30, 32, 34 und 36 des Nachrichtenservers 20 sind in diesem Ausführungsbeispiel zentral in dem Nachrichtenserver 20 vorgesehen. In alternativen Ausführungen ist aber auch eine dezentrale Anordnung einzelner oder aller oben genannten Komponenten im Mobilfunknetz 10 möglich. Eine Integration des Nachrichtenservers 20 oder einzelner Komponenten 22, 24, 26, 28, 30, 32, 34 und 36 des Nachrichtenservers 20 in dem Sprachnachrichtenspeicher 14 ist ebenfalls möglich.

Mit einem Mobilfunkendgerät 40 wird für den Mobilfunkteilnehmer 16 eine Kommunikation mit anderen Benutzern über das Mobilfunknetz 10 oder eine Inanspruchnahme von Diensten mobil ermöglicht. Als Mobilfunkendgerät 40 kann beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 42 (z.B. eine PMCCIA-Karte) verwendet werden. Das Mobilfunkendgerät 40 enthält neben anderen, für eine Kommunikation über das Mobilfunknetz 10 notwendigen und einem Fachmann bekannten Vorrichtungen und Funktionalitäten insbesondere eine Bedienungseinheit 44 und eine Anzeige 46.

Der Mobilfunkteilnehmer 16 verfügt weiterhin über ein Endgerät 50 zur Nutzung des Internets 52, wie beispielsweise einen PC oder ein Laptop. Bestandteile und Funktionsweise des Internets 52 sind dem Fachmann ebenfalls bekannt. Der Einfachheit halber wird das Internet 52 daher nur durch eine Wolke mit darin enthaltenen Rechnern 54 stilisiert dargestellt. In einem mit dem Internet 52 verbundenen E-Mail-Server 56 besitzt der Mobilfunkteilnehmer 16 ein E-Mail-Konto 58 mit einer eindeutigen E-Mail-Adresse 60.

Im Folgenden wird die Funktionsweise des Nachrichtenservers 20 und seiner Komponenten zusammen mit dem beispielhaften Verfahren zur Weiterleitung von Sprachnachrichten als E-Mail beschrieben.

Wenn der Anrufer 18 mit einem Telekommunikationsendgerät 62, z.B. einem Mobilfunkendgerät, einem Festnetztelefon oder einem VoIP- (Voice over Internet Protocol-) Telefon, das Mobilfunkendgerät 40 des Mobilfunkteilnehmers 16 anruft, erreicht eine Rufanforderung das Mobilfunknetz 10 direkt vom Telekommunikationsendgerät 62 oder über in Fig. 1 nicht dargestellt Kommunikationsnetze. Falls das Mobilfunkendgerät 40 ausgeschaltet ist, gerade zur verbalen Kommunikation mit einem anderen Teilnehmer benutzt wird, oder sich nicht im Abdeckungsbereich des Mobilfunknetzes 10 befindet, wird die Rufanforderung an den Sprachnachrichtenspeicher 14 vermittelt und eine Verbindung zwischen dem Sprachnachrichtenspeicher 14 und dem Telekommunikationsendgerät 62 aufgebaut, Pfeil 70. Anschließend wird der Anrufer 18 zum Hinterlassen einer Sprachnachricht 72 aufgefordert. Die Sprachnachricht 72 wird zunächst in dem Sprachnachrichtenspeicher 14 zusammen mit einer Rufnummer 73 des Telekommunikationsendgeräts 62 gespeichert und die Verbindung 70 wieder abgebaut.

Anschließend wird die Sprachnachricht 72 mit der Rufnummer 73 als MMS-Nachricht 74 an die Empfangseinheit 22 des Nachrichtenservers 20 weitergeleitet, Pfeil 75. Die Filtereinrichtung 32 prüft zunächst, ob die Sprachnachricht 72 unerwünscht ist. Unerwünschte Sprachnachrichten können z.B. Werbenachrichten oder Sprachnachrichten von bestimmten, vom Mobilfunkteilnehmer 16 mit der Konfigurationsvorrichtung 34 eingestellten Anrufern sein. Auch eine Aussortierung von virenverseuchten Sprachnachrichten ist denkbar. Ist die Sprachnachricht erwünscht, konvertiert die Konvertierungsvorrichtung 24 des Nachrichtenservers 20 die MMS-Nachricht 74 bzw. die Sprachnachricht 72 in eine E-Mail 76 für den Mobilfunkteilnehmer 16, symbolisch als Pfeil 78 dargestellt. Dazu ermittelt der Nachrichtenserver die E-Mail-Adresse 60 des Mobilfunkteilnehmers 16 aus einem Teilnehmerprofil. Zusätzlich enthält die E-Mail 76 einer eindeutige Kennung 80. Dann wird die E-Mail 76 durch die Übertragungsmittel 26 an das E-Mail-Konto 58 des Mobilfunkteilnehmers 16 gesendet, Pfeil 82. Zusätzlich wird die E-Mail 76 in dem Nachrichtenspeicher 36 für einen erneuten Abruf durch den Mobilfunkteilnehmer gespeichert bzw. archiviert. Somit kann der Mobilfunkteilnehmer 16 die E-Mail 76 mit der Sprachnachricht 72 jederzeit erneut abrufen und ist gegen einen Verlust der E-Mail 76 geschützt.

Der Mobilfunkteilnehmer 16 verwendet zum Empfangen der E-Mail 76 das Endgerät 50 und ein darin enthaltenes E-Mail-Programm 84. Das E-Mail-Programm 84 lädt alle im E-Mail-Konto 58 gespeicherten E-Mails auf das Endgerät 50 und stellt die E-Mails für den Mobilfunkteilnehmer 16 dar, Pfeil 86. Dem Mobilfunkteilnehmer 16 wird es somit ermöglicht, die Sprachnachricht 72 des Anrufers 18 zusammen mit anderen E-Mails zu lesen bzw. anzuhören.

Falls der Mobilfunkteilnehmer 16 den Anrufer 18 zurückrufen möchte, sendet er mit Hilfe des E-Mail-Programms 84 eine Antwort-E-Mail 88 mit der Kennung 80 über den E-Mail-Server 56 an den Nachrichtenserver 20, Pfeil 90. Die Antwort-E-Mail 88 kann beispielsweise eine leere, vom E-Mail-Programm generierte E-Mail sein. Denkbar ist auch eine durch Anwählen eines Steuerelements in der E-Mail 76 automatisch generierte E-Mail.

Die Antwort-E-Mail 88 wird von der Anforderungseinheit 28 empfangen. Mit Hilfe der Kennung 80 ordnet der Nachrichtenserver 20 der Antwort-E-Mail 88 die Rufnummer 73 des Anrufers 18 zu. Anschließende sendet der Nachrichtenserver 20 mit der Übermittlungseinheit 30 eine SMS-Kurznachricht 92 mit der Rufnummer 73 an das Mobilfunkendgerät 40, Pfeil 94. Dazu kann auch vorgesehen sein, die Rufnummer 73 als Absenderrufnummer der SMS-Kurznachricht zu verwenden. Der Mobilfunkteilnehmer 16 kann nun die SMS-Kurznachricht 92 mit Hilfe der Bedienungseinheit 44 des Mobilfunkendgeräts 40 auf der Anzeige 46 betrachten. Insbesondere wird dem Mobilfunkteilnehmer 16 mit Übernahme und Verwendung der Rufnummer 73 durch das Mobilfunkendgerät 40 ein sehr einfacher und bequemer Rückruf 96 an den Anrufer 18 ermöglicht.

## Patentansprüche

1. Verfahren zur Weiterleitung einer Sprachnachricht (72), welche von einem Anrufer (18) in einem Sprachnachrichtenspeicher (14) eines Mobilfunkteilnehmers (16) in einem Mobilfunknetz (10) hinterlassen wird, mit folgenden Verfahrensschritten:
a) Weiterleiten (75) der Sprachnachricht (72) von dem Sprachnachrichtenspeicher (14) zu einem Nachrichtenserver (20) im Mobilfunknetz (10),
b) Konvertieren (78) der Sprachnachricht (72) durch eine Konvertierungsvorrichtung (24) des Nachrichtenservers (20) in eine E-Mail (76),
c) Übermitteln (82) der E-Mail (76) mit der Sprachnachricht (72) und einer Kennung (80) des Anrufers (18) an ein E-Mail-Konto (58) des Mobilfunkteilnehmers (16) und
d) Empfangen (86) der E-Mail (76) mit der Sprachnachricht (72) mit einem E-Mail-Programm (84) auf einem Endgerät (50) durch den Mobilfunkteilnehmer (16),
**gekennzeichnet durch**
e) Anfordern (90) einer Rufnummer (73) des Anrufers (18) von dem Nachrichtenserver (20) mittels der Kennung (80) **durch** den Mobilfunkteilnehmer (16) und
f) Übermitteln (94) der Rufnummer (73) des Anrufers (18) von, dem Nachrichtenserver (20) an ein Mobilfunkendgerät (40) des Mobilfunkteilnehmers (16) für einen Rückruf (96).

2. Verfahren zur Weiterleitung einer Sprachnachricht (72) nach Anspruch 1, **dadurch gekennzeichnet, dass** das Anfordern (90) der Rufnummer (73) des Anrufers (18) durch Übermitteln (90) einer Antwort-E-Mail (88) mit der Kennung (80) von dem Endgerät (50) des Mobilfunkteilnehmers (16) an den Nachrichtenserver (20) erfolgt.

3. Verfahren zur Weiterleitung einer Sprachnachricht (72) nach Anspruch 1 oder 2, **dadurch gekennzeichnet, dass** das Übermitteln (94) der Rufnummer (73) des Anrufers (18) von dem Nachrichtenserver (20) an das Mobilfunkendgerät (40) des Mobilfunkteilnehmers (16) durch eine SMS-Kurznachricht (92) erfolgt.

4. Verfahren zur Weiterleitung einer Sprachnachricht (72) nach Anspruch 3, **dadurch gekennzeichnet, dass** die SMS-Kurznachricht (92) von dem Nachrichtenserver (20) als Absenderrufnummer die Rufnummer (73) des Anrufers (18) enthält.

5. Verfahren zur Weiterleitung einer Sprachnachricht (72) nach einem der Ansprüche 1 bis 4, **dadurch gekennzeichnet, dass** die Sprachnachricht (72) von dem Sprachnachrichtenspeicher (14) als MMS-Nachricht (74) an den Nachrichtenserver (20) übermittelt wird.

6. Verfahren zur Weiterleitung einer Sprachnachricht (72) nach einem der Ansprüche 1 bis 5, **dadurch gekennzeichnet, dass** der Mobilfunkteilnehmer (16) eine Konfiguration des Nachrichtenserver (20) mit einer Konfigurationsvorrichtung (34) durchführt.

7. Verfahren zur Weiterleitung einer Sprachnachricht (72) nach einem der Ansprüche 1 bis 6, **gekennzeichnet durch** Archivieren der E-Mail (76) mit der Sprachnachricht (72) in einem Nachrichtenspeicher (36) des Mobilfunknetzes (10) für den Mobilfunkteilnehmer (16).

8. Verfahren zur Weiterleitung einer Sprachnachricht (72) nach einem der Ansprüche 1 bis 7, **gekennzeichnet durch** Aussortieren von unerwünschten Sprachnachrichten **durch** eine Filtereinrichtung (32) des Nachrichtenservers (20).

9. Nachrichtenserver (20) in einem Mobilfunknetz (10) zur Weiterleitung einer Sprachnachricht (72), welche von einem Anrufer (18) in einem Sprachnachrichtenspeicher (14) eines Mobilfunkteilnehmers (16) in dem Mobilfunknetz (10) hinterlassen wird, der Nachrichtenserver enthaltend:
f) eine Empfangseinheit (22) zum Empfangen der Sprachnachricht (72) von dem Sprachnachrichtenspeicher (14),
g) eine Konvertierungsvorrichtung (24) zum Konvertieren der Sprachnachricht (72) in eine E-Mail (76) und
h) ein Übertragungsmittel (30) zum Übermitteln der E-Mail (76) mit der Sprachnachricht (72) und einer Kennung (80) des Anrufers (18) an ein E-Mail-Konto (58) des Mobilfunkteilnehmers (16),
**dadurch gekennzeichnet, dass**
i) eine Anforderungseinheit (28) zum Empfangen einer Anforderung einer Rufnummer (73) des Anrufers (18) mit der Kennung (80) von dem Mobilfunkteilnehmer (16) und
j) eine Übermittelungseinheit (30) zum Übermitteln der Rufnummer (73) des Anrufers (18) von dem Nachrichtenserver (20) an ein Mobilfunkendgerät (40) des Mobilfunkteilnehmers (16) für einen Rückruf (96) vorgesehen sind.

10. Nachrichtenserver (20) in einem Mobilfunknetz (10) zur Weiterleitung einer Sprachnachricht (72) nach Anspruch 9, **dadurch gekennzeichnet, dass** das die Anforderungseinheit (28) zum Empfangen einer Antwort-E-Mail (88) als Anforderung einer Rufnummer (73) des Anrufers (18) ausgebildet ist.

11. Nachrichtenserver (20) in einem Mobilfunknetz (10) zur Weiterleitung einer Sprachnachricht (72) nach Anspruch 9 oder 10, **dadurch gekennzeichnet, dass** die Übermittelungseinheit (30) zum Senden einer SMS-Kurznachricht (92) mit der Rufnummer (73) des Anrufers (18) an das Mobilfunkendgerät (40) des Mobilfunkteilnehmers (16) ausgebildet ist.

## Claims

1. A method of forwarding a voice message (72) left by a caller (18) in a voice message storage (14) of a mobile subscriber (16) in a mobile radio network (10) comprising the steps of:
a) forwarding (75) the voice message (72) from the voice message storage (14) to a message server (20) in the mobile radio network (10),
b) converting (78) the voice message (72) into an e-mail (76) by a converting device (24) of the message server (20),
c) transmitting (82) the e-mail (76) comprising the voice message (72) and an identifier (80) of the caller (18) to an e-mail account (58) of the mobile subscriber (16), and
d) receiving (86) the e-mail (76) comprising the voice message (72) with an e-mail program (84) on a terminal (50) by the mobile subscriber (16),
**characterised by**
e) requesting (90) a call number (73) of the caller (18) from the message server (20) using the identifier (80) by the mobile subscriber (16), and
f) transmitting (94) the call number (73) of the caller (18) from the message server (20) to a mobile station (40) of the mobile subscriber (16) for a call-back (96).

2. A method of forwarding a voice message (72) according to claim 1, **characterised in that** requesting (90) the call number (73) of the caller (18) is carried out by transmitting (90) a response e-mail (88) comprising the identifier (80) from the terminal (50) of the mobile subscriber (16) to the message server (20).

3. A method of forwarding a voice message (72) according to claim 1 or 2, **characterised in that** transmitting (94) the call number (73) of the caller (18) from the message server (20) to the mobile station (40) of the mobile subscriber (16) is carried out with a SMS short message (92).

4. A method of forwarding a voice message (72) according to claim 3, **characterised in that** the SMS short message (92) from the message server (20) comprises the call number (73) of the caller (18) as sender call number.

5. A method of forwarding a voice message (72) according to one of claims 1 to 4, **characterised in that** the voice message (72) is transmitted from the voice message storage (14) to the message server (20) as MMS message (74).

6. A method of forwarding a voice message (72) according to one of claims 1 to 5, **characterised in that** the mobile subscriber (16) performs a configuration of the message server (20) using a configuration device (34).

7. A method of forwarding a voice message (72) according to one of claims 1 to 6, **characterised by** archiving the e-mail (76) comprising the voice message (72) in a message storage (36) of the mobile radio network (10) for the mobile subscriber (16).

8. A method of forwarding a voice message (72) according to one of claims 1 to 7, **characterised by** sorting out undesired voice messages by a filter device (32) of the message server (20).

9. A message server (20) in a mobile radio network (10) for forwarding a voice message (72) left by a caller (18) in a voice message storage (14) of a mobile subscriber (16) in the mobile radio network (10), the message server comprising:
f) a receiver unit (22) for receiving the voice message (72) from the voice message storage (14),
g) a converting device (24) for converting the voice message (72) into an e-mail (76), and
h) transmitting means (30) for transmitting the e-mail (76) comprising the voice message (72) and an identifier (80) of the caller (18) to an e-mail account (58) of the mobile subscriber (16),
**characterised in that**
i) a requesting unit (28) is provided for receiving a request of a call number (73) of the caller (18) with the identifier (80) from the mobile subscriber (16), and
j) a transmission unit (30) is provided for transmitting the call number (73) of the caller (18) from the message server (20) to a mobile station (40) of the mobile subscriber (16) for a call-back (96).

10. A message server (20) in a mobile radio network (10) for forwarding a voice message (72) according to claim 9, **characterised in that** the requesting unit (28) is adapted for receiving a response e-mail (88) as request for a call number (73) of the caller (18).

11. A message server (20) in a mobile radio network (10) for forwarding a voice message (72) according to claim 9 or 10, **characterised in that** the transmission unit (30) is adapted for sending a SMS short message (92) comprising the call number (73) of the caller (18) to the mobile station (40) of the mobile subscriber (16).

## Revendications

1. Procédé de transfert d'un message vocal (72) laissé par un appelant (18) sur une messagerie vocale (14) d'un utilisateur de réseau de radiotéléphonie mobile (16) situé dans un réseau de radiotéléphonie mobile (10), comportant les étapes de procédé suivantes :
(a) transfert (75) du message vocal (72) depuis la messagerie vocale (14) vers le serveur de messagerie (20) situé dans le réseau de radiotéléphonie mobile (10),
(b) conversion (78) du message vocal (72) par un dispositif de conversion (24) du serveur de messagerie (20) en courriel (76),
(c) transmission (82) du courriel (76) contenant le message vocal (72) et un identifiant (80) de l'appelant (18) à un compte de courrier électronique (58) de l'utilisateur de radiotéléphonie mobile (16) et
(d) réception (86) sur un terminal (50) par l'utilisateur de radiotéléphonie mobile (16) du courriel (76) contenant le message vocal (72) à l'aide d'un programme de courrier électronique (84),
**caractérisé par**
(e) la demande (90) effectuée par l'utilisateur de radiotéléphonie mobile (16) d'un numéro d'appel (73) de l'appelant (18) depuis le serveur de messagerie (20) au moyen de l'identifiant (80) et
(f) la transmission (94) du numéro d'appel (73) de l'appelant (18) depuis le serveur de messagerie (20) vers un terminal de radiotéléphonie mobile (40) de l'utilisateur de radiotéléphonie mobile (16) en vue d'un rappel (96).

2. Procédé de transfert d'un message vocal (72) selon la revendication 1, **caractérisé en ce que** la demande (90) de numéro d'appel (73) de l'appelant (18) s'effectue en transmettant (90) un courriel réponse (8) contenant l'identifiant (80) depuis le terminal (50) de l'utilisateur de radiotéléphonie mobile (16) vers le serveur de messagerie (20).

3. Procédé de transfert d'un message vocal (72) selon la revendication 1 ou 2, **caractérisé en ce que** la transmission (94) du numéro d'appel (73) de l'appelant (18) depuis le serveur de messagerie (20) vers le terminal de radiotéléphonie mobile (40) de l'utilisateur de radiotéléphonie mobile (16) s'effectue à l'aide d'un message court SMS (92).

4. Procédé de transfert d'un message vocal (72) selon la revendication 3, **caractérisé en ce que** le message court SMS (92) du serveur de messagerie (20) contient comme numéro d'appel expéditeur le numéro d'appel (73) de l'appelant (18).

5. Procédé de transfert d'un message vocal (72) selon l'une quelconque des revendications 1 à 4, **caractérisé en ce que** le message vocal (72) est transmis au serveur de messagerie (20) depuis la messagerie vocale (14) sous forme de message MMS (74).

6. Procédé de transfert d'un message vocal (72) selon l'une des revendications 1 à 5, **caractérisé en ce que** l'utilisateur de radiotéléphonie mobile (16) exécute une configuration du serveur de messagerie (20) à l'aide d'un dispositif de configuration (34).

7. Procédé de transfert d'un message vocal (72) selon l'une des revendications 1 à 6, **caractérisé par** l'archivage du courriel (76) contenant le message vocal (72) dans une messagerie (36) du réseau de radiotéléphonie mobile (10) pour l'utilisateur de radiotéléphonie mobile (16).

8. Procédé de transfert d'un message vocal (72) selon l'une des revendications 1 à 7, **caractérisé par** le tri des messages vocaux indésirables effectué par un dispositif de filtrage (32) du serveur de messagerie (20).

9. Serveur de messagerie (20) situé dans un réseau de radiotéléphonie mobile (10) pour le transfert d'un message vocal (72) qui est laissé par un appelant (18) dans une messagerie vocale (14) d'un utilisateur de radiotéléphonie mobile (16) situé dans le réseau de radiotéléphonie mobile (10), le serveur de messagerie comprenant :
(f) une unité de réception (22) pour la réception du message vocal (72) depuis le serveur de messagerie (14),
(g) un dispositif de conversion (24) pour la conversion du message vocal (72) en courriel (76) et
(h) un moyen de transmission (30) pour la transmission du courriel (76) contenant le message vocal (72) et un identifiant (80) de l'appelant (18) à un compte de courrier électronique (58) de l'utilisateur de radiotéléphonie mobile (16),
**caractérisé en ce que**
(i) il est prévu une unité de demande (28) pour la réception d'une demande de numéro d'appel (73) de l'appelant (18) avec l'identifiant (80) de l'utilisateur de radiotéléphonie mobile (16) et
(j) une unité de transmission (30) pour la transmission du numéro d'appel (73) de l'appelant (18) depuis le serveur de messagerie (20) vers un terminal de radiotéléphonie mobile (40) de l'utilisateur de radiotéléphonie mobile (16) en vue d'un rappel (96).

10. Serveur de messagerie (20) situé dans un réseau de radiotéléphonie mobile (10) pour la transmission d'un message vocal (72) selon la revendication 9, **caractérisé en ce que** l'unité de demande (28) pour la réception d'un courriel réponse (88) est configurée sous forme de demande de numéro d'appel (73) de l'appelant (18).

11. Serveur de messagerie (20) situé dans un réseau de radiotéléphonie mobile (10) pour le transfert d'un message vocal (72) selon la revendication 9 ou 10, **caractérisé en ce que** l'unité de transmission (30) est configurée de manière à envoyer un message court SMS (92) avec le numéro d'appel (73) de l'appelant (18) au terminal de radiotéléphonie mobile (40) de l'utilisateur de radiotéléphonie mobile (16).
